# EUROPEAN PATENT SPECIFICATION

(11) **EP 3 029 325 B1**
(45) Date of publication and mention of the grant of the patent: **21.03.2018**
(21) Application number: 15177525.1
(22) Date of filing: 20.07.2015
(51) Int. Cl.: F04B 53/10, F16K 11/065

(54) **SPOOL VALVE, HYDRAULIC MACHINE, AND WIND TURBINE POWER GENERATING APPARATUS**
SCHIEBERVENTIL, HYDRAULIKMASCHINE UND WINDTURBINENSTROMERZEUGUNGSVORRICHTUNG
TIROIR DE VANNE, MACHINE HYDRAULIQUE ET APPAREIL DE GÉNÉRATION D'ÉNERGIE ÉOLIENNE

(30) Priority: 02.12.2014 JP 2014243752
(43) Date of publication of application: 08.06.2016
(73) Proprietor: MITSUBISHI HEAVY INDUSTRIES, LTD., Tokyo 108-8215 (JP)
(72) Inventor: NOMAGUCHI, Hiroyuki, TOKYO, 108-8215 (JP); YUGE, Atsushi, TOKYO, 108-8215 (JP)
(74) Representative: Intès, Didier Gérard André

(56) References cited:
- EP-A2- 0 879 979
- DE-A1- 2 725 917
- US-A- 2 916 019
- US-A1- 2012 199 770

## Description

### TECHNICAL FIELD

The present disclosure relates to a spool valve used in a hydraulic machine, a hydraulic machine, and a wind turbine power generating apparatus.

### BACKGROUND

In a hydraulic machine such as a hydraulic pump and a hydraulic motor, a spool valve is occasionally used to open and close a flow channel. A spool valve is generally configured to open and close flow-channel ports formed on a cylindrical sleeve with a spool disposed inside the sleeve moving in the axial direction. Since the spool valve is suitably used as a multi-port valve, it is used to switch communication among a plurality of flow channels, or to adjust the opening degree of a flow channel.

For instance, Patent Document 1 discloses a spool valve with the first pressure-receiving surface formed on one end of a spool, and the second pressure-receiving surface formed on the other end of the spool. The first pressure-receiving surface receives the first pilot pressure from working oil in the first pilot chamber, and the second pressure-receiving surface receives the second pilot pressure applied in a direction different from that of the first pilot pressure, from working oil in the second pilot chamber. This spool valve is configured to switch a flow channel by shifting the spool between the first position and the second position with the first pilot pressure and the second pilot pressure. Patent Document 2, Patent Document 3 and Patent Document 4 each present similar examples of spool valve.

### Citation List

### Patent Literature

Patent Document 1: JP2012-107687A
Patent Document 2: US 2916019
Patent Document 3: EP 0879979
Patent Document 4: DE 2725917

### SUMMARY

In the spool valve described above, the spool normally moves in the axial direction with an increasing speed due to a difference in the forces received by the first pressure-receiving surface and the second pressure-receiving surface when the flow channel is switched, thereby reaching a casing disposed on a stroke end, colliding with the casing to be stopped.

However, when the spool collides with the casing at a high speed, there is a risk that a casing component, a peripheral device of the casing or the spool itself gets damaged.

In this regard, Patent Document 1 discloses no configuration for preventing a trouble of a spool valve or a peripheral component caused by collision of the spool with a casing when a flow channel of the spool valve is switched.

In view of the above issues, an object of at least one embodiment of the present invention is to provide a spool valve, a hydraulic machine and a wind turbine power generating apparatus, whereby it is possible to avoid occurrence of a trouble in a spool valve and its peripheral component caused by collision of the spool with a casing when a flow channel of the spool valve is switched.
(1) A spool valve according to at least one embodiment of the present invention is used in a hydraulic machine including a hydraulic chamber, a high-pressure oil line and a low-pressure oil line. The spool valve includes: a casing which includes a hydraulic-chamber port communicating with the hydraulic chamber, a high-pressure port communicating with the high-pressure oil line, and a low-pressure port communicating with the low-pressure oil line; a spool configured to a switch a state of the hydraulic machine between a first state in which the hydraulic chamber and the high-pressure oil line are in communication and a second state in which the hydraulic chamber and the low-pressure oil line are in communication, by moving in an axial direction of the spool inside the casing; and a pair of damper chambers disposed between respective end surfaces of the spool and respective side plates of the casing which face the end surfaces, and configured to decelerate the spool when the spool reaches a position immediately before a stroke end.
   With the above configuration (1), when the spool valve is switched between the first state and the second state, the spool is decelerated by oil (e.g. working oil) stored in the damper chamber when the spool moves in the axial direction to reach a position immediately before the stroke end. Thus, it is possible to prevent the spool from colliding with the side plate at a high speed, and to avoid occurrence of a trouble such as breakage of a casing component, a peripheral component of the casing or the spool itself.
(2In the above configuration (1), the spool valve further includes a damper-effect adjustment part configured to be capable of varying a deceleration effect on the spool achieved by the pair of damper chambers.
   For instance, the viscosity of the oil may differ depending on the type of the oil in the damper chamber or the operation temperature of the spool valve. In this case, it is difficult to obtain a constant damper effect consistently. Specifically, when the oil temperature increases and the viscosity decreases, the damper effect may be reduced and deceleration of the spool may become insufficient.
   In view of this, with the above configuration (2), the damper effect can be adjusted by the damper-effect adjustment part, which makes it possible to appropriately decelerate the spool in accordance with the operation pressure of the spool valve, the type of the oil in the damper chamber, the operation environment (e.g. the oil temperature) of the spool valve, or the like.
(3) In one embodiment, in the above configuration (2), the damper-effect adjustment part includes a pair of accumulators provided respectively corresponding to the pair of damper chambers, and each accumulator includes an oil chamber communicating with corresponding one of the damper chambers, and a gas chamber disposed separately from the oil chamber across a deformable bladder.
   With the above configuration (3), it is possible to make the oil-column spring strength in the damper chambers variable by changing the capacity of gas in the accumulators in accordance with the operation pressure of the spool valve, the type of the oil in the damper chambers, the operation environment (e.g. oil temperature) of the spool valve, or the like. Further, since the damper-effect adjustment part includes the accumulators connected to the respective damper chambers, it is possible to decelerate the spool appropriately with a simplified configuration.
(4) In another embodiment, in the above configuration (2), the damper-effect adjustment part includes: a pair of check valves provided respectively corresponding to the pair of damper chambers, each of the check valves being configured to prevent a flow of an oil into the corresponding damper chamber and to open to allow an outflow of the oil from the corresponding damper chamber when a pressure in the corresponding damper chamber reaches a cracking pressure or higher, a high-pressure branch line branched from the high-pressure oil line and connected to a downstream side of the pair of check valves, and a variable pressure-decreasing valve disposed in the high-pressure branch line, and configured to adjust the cracking pressure of the check valves by reducing a pressure in the high-pressure branch line.
   With the above configuration (4), the variable pressure-reducing valve changes the pressures at the downstream sides of the pair of check valves, which makes it possible to adjust the damper effect achieved by the damper chambers in accordance with the operation pressure of the spool valve, the type of oil in the damper chambers, or the operation environment (e.g. oil temperature) of the spool valve, or the like.
(5) In one embodiment, in the above configuration (4), the variable pressure-reducing valve is configured to adjust an amount of pressure decrease in the high-pressure branch line on the basis of a measurement value of at least one of a temperature of the oil or the pressure in the high-pressure oil line.
   With the above configuration (5), the variable pressure-reducing valve is controlled on the basis of a measurement value of at least one of the oil temperature or the pressure in the high pressure oil line to adjust the amount of pressure decrease in the high-pressure branch line, which enables an automatic control of the variable pressure-reducing valve. Thus, it is possible to optionally adjust the performance of the damper even if the operation pressure of the spool valve, the type of oil in each damper chamber, the operation environment (e.g. oil temperature) of the spool valve, or the like is varied.
(6) In yet another embodiment, in the above configuration (2), the damper-effect adjustment part includes: a pair of orifices provided respectively corresponding to the pair of damper chambers; and a switch valve including a supply port communicating with the high-pressure oil line, a tank port communicating with the low-pressure oil line, a first control port and a second control port, the first control port and the second control port each communicating with a downstream side of corresponding one of the pair of orifices.
   The switch valve is configured to switch a port communication state between a state in which the first control port is in communication with the supply port and the second control port is in communication with the tank port, and a state in which the second control port is in communication with the supply port and the first control port is in communication with the tank port.
(7) In one embodiment, in the above configuration (6), the spool valve further includes a position sensor for detecting a position of the spool in the casing. The switch valve of the damper-effect adjustment part is configured to switch the port communication state on the basis of a detection signal of the position sensor.
   For instance, the position sensor detects the displacement of the spool. In this case, the switch valve may switch the port communication state on the basis of the displacement of the spool, the velocity based on the displacement of the spool, or the acceleration based on the displacement of the spool.
   With the above configuration (6) or (7), the high-pressure oil is supplied to the damper chambers in response to the detection signal of the position sensor, which makes it possible to decelerate the spool appropriately. Further, since the position sensor is used, it is possible to optionally adjust the timing to operate the switch valve.
(8) A hydraulic machine according to at least one embodiment of the present invention includes: at least one spool valve according to the above (1) to (7); the hydraulic chamber; the high pressure oil line; and the low pressure oil line.
   With the above configuration (8), it is possible to provide a hydraulic machine with a high reliability because failure of the spool valve is avoidable for the above described reasons.
(9) In some embodiments, in the above configuration (8), the hydraulic machine includes a plurality of the spool valves connected in parallel to the hydraulic chamber, the high-pressure oil line and the low-pressure oil line.
(10) In one embodiment, in the above configuration (9), the hydraulic machine includes: a plurality of position sensors for detecting positions of the spools in the casings, the position sensors being disposed on the respective spool valves; and a controller configured to control, when it is determined that sticking of a spool has occurred in at least one of the plurality of spool valves, other ones of the spool valves in which the sticking has not occurred to enter the second state, based on detection signals of the position sensors.
   With the above configuration (10), when it is determined that sticking has occurred in one of the spool valves, the state of the other spool valves with no sticking is controlled to enter the above second state. In this way, it is possible to prevent the pressure in the hydraulic chamber from rising excessively high because the hydraulic chamber and the low pressure oil line are in communication in the other spool valves in which sticking has not occurred, even if sticking has occurred in one of the spool valves while the high pressure oil line and the hydraulic chamber are in communication. That is, it is possible to prevent occurrence of a serious trouble in the hydraulic machine because the pressure in the hydraulic chamber can be maintained at an appropriate pressure even if an operation error such as the sticking of a spool has occurred in the spool valve.
(11) In some embodiments, in the above configurations (8) to (10), the hydraulic machine further includes: a storage tank for storing the oil; a boost pump for increasing a pressure of the oil in the storage tank and supplying the oil to the low-pressure oil line; a hydraulic-chamber line for connecting the hydraulic-chamber port of each spool valve and the hydraulic chamber; a spool bypass line for connecting the low-pressure oil line and the hydraulic-chamber line so as to bypass the spool valves; and a check valve disposed in the spool bypass line and configured to prevent a flow of an oil into the low-pressure oil line from the hydraulic-chamber line, and to open to allow a flow of the oil from the low-pressure oil line toward the hydraulic-chamber line when a pressure in the hydraulic-chamber line reaches a cracking pressure or lower.
   For instance, in a case where the spool has got stuck at the intermediate position of the first state and the second state, the pressure in the hydraulic chamber may become a negative pressure. In this case, a trouble such as abnormal vibration in the hydraulic machine may occur.
   In this regard, with the above configuration (11), the check valve opens when the pressure in the hydraulic-chamber line has reached the cracking pressure or lower, and the low pressure oil is supplied from the low pressure oil line to the hydraulic chamber via the hydraulic chamber line. In this way, it is possible to prevent the pressure in the hydraulic chamber from abnormally decreasing and to maintain the pressure in the hydraulic pressure at an appropriate pressure, which makes it possible to prevent occurrence of a serious trouble in the hydraulic machine.
(12) A wind turbine power generating apparatus according to at least one embodiment of the present invention includes: a wind turbine rotor; a generator; a hydraulic pump configured to be driven by the wind turbine rotor to increase a pressure of the oil and to discharge a high-pressure oil to the high pressure oil line; a hydraulic motor configured to be driven by the high-pressure oil received from the hydraulic pump via the high pressure oil line and to input mechanical energy to the generator, the hydraulic motor having an outlet connected to an inlet of the hydraulic pump. At least one of the hydraulic pump or the hydraulic motor is the hydraulic machine according to any one of the above (8) to (11).

With the above configuration (12), it is possible to provide a wind turbine power generating apparatus with a high reliability because it is possible to avoid failure of the spool valve for the above described reasons.

According to at least one embodiment of the present invention, it is possible to prevent the spool from colliding with the side plates of the casing at a high speed when the flow channel is switched, thanks to the damper effects achieved by the damper chambers disposed on the side plates of the casing. Further, it is possible to avoid occurrence of a trouble such as breakage of a casing component, a peripheral component or the spool itself.

### BRIEF DESCRIPTION OF DRAWINGS

FIG. 1 is a schematic configuration diagram of a wind turbine power generating apparatus according to some embodiments.
FIG. 2 is a schematic configuration diagram of a hydraulic motor including a spool valve according to some embodiments.
FIG. 3 is a cross-sectional view of a spool valve according to some embodiments.
FIG. 4 is a schematic configuration diagram of a spool valve according to one embodiment.
FIG. 5 is a schematic configuration diagram of a spool valve according to another embodiment.
FIG. 6 is a schematic configuration diagram of a spool valve according to yet another embodiment.
FIG. 7 is a schematic configuration diagram of a hydraulic machine (hydraulic motor) according to one embodiment.
FIG. 8 is a schematic configuration diagram of a hydraulic machine (hydraulic motor) according to another embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

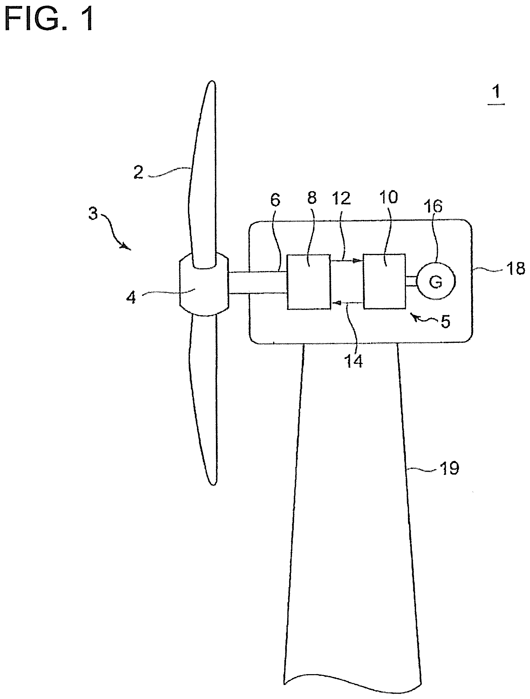

First, with reference to FIG. 1, the wind turbine power generating apparatus 1 according to the present embodiment will be described. Here, FIG. 1 is a schematic configuration diagram of a wind turbine power generating apparatus 1 according to some embodiments.

As illustrated in the drawing, the wind turbine power generating apparatus 1 according to some embodiments includes a wind turbine rotor 3 including at least one blade 2 and a hub 4. The wind turbine rotor 3 and a rotation shaft 6 (main shaft) coupled to the wind turbine rotor 3 are configured to be rotated by wind energy received by the blade 2.

A hydraulic pump 8 is coupled to the wind turbine rotor 3 of the wind turbine power generating apparatus 1 via the rotation shaft 6. A hydraulic motor 10 is connected to the hydraulic pump 8 via a low pressure oil line 14 and a high pressure oil line 12. Specifically, the outlet of the hydraulic pump 8 is connected to the inlet of the hydraulic motor 10 via the high pressure oil line 12, and the inlet of the hydraulic pump 8 is connected to the outlet of the hydraulic motor 10 via the low pressure oil line 14. The hydraulic pump 8 increases the pressure of working oil by being driven by the rotation shaft 6 to produce high-pressure working oil (high-pressure oil). The high-pressure oil generated in the hydraulic pump 8 is supplied to the hydraulic motor 10 via the high pressure oil line 12, and the hydraulic motor 10 is driven by this high-pressure oil. Low pressure working oil (low-pressure oil) having performed work in the hydraulic motor 10 is again returned to the hydraulic pump 8 via the low pressure oil line 14 disposed between the outlet of the hydraulic motor 10 and the inlet of the hydraulic pump 8.

A generator 16 is coupled to the hydraulic motor 10. In one embodiment, the generator 16 is a synchronous generator connected to a utility grid and driven by the hydraulic motor 10.

At least a part of the rotation shaft 6 is covered by a nacelle 18 disposed on the tower 19. In one embodiment, the hydraulic pump 8, the hydraulic motor 10 and the generator 16 are disposed inside the nacelle 18. However, at least one of the hydraulic motor 10 or the generator 16 may be disposed outside the nacelle 18, such as the inside of the tower 19.

In the wind turbine power generating apparatus 1 illustrated in FIG. 1, rotation energy of the wind turbine rotor 3 is inputted into the generator 16 via the hydraulic transmission 5 which is a hydraulic machine including the hydraulic pump 8 and the hydraulic motor 10, so that electric power is generated in the generator 16.

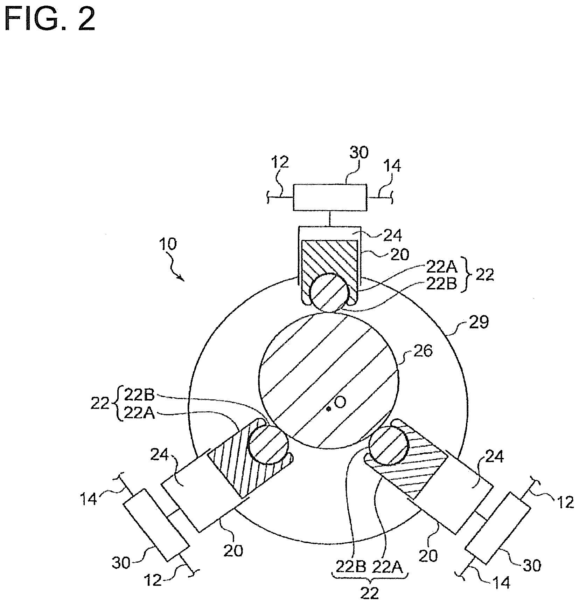

FIG. 2 is a schematic diagram for describing a configuration of the hydraulic motor 10.

As illustrated in FIG. 2, the hydraulic motor 10 includes a plurality of hydraulic chambers 24 formed by respective cylinders 20 and pistons 22, a cam 26 having a cam curved surface that contacts the pistons 22, a spool valve 30 disposed on each hydraulic chamber 24, the high pressure oil line 12, and the low pressure oil line 14.

Each piston 22 may include a piston body portion 22A that reciprocates in the corresponding cylinder 20 and a piston roller or a piston shoe attached to the piston body portion 22A so as to contact the cam curved surface of the cam 26, in view of smooth conversion between the vertical motion of the pistons 22 and the rotational motion of the cam 26. In the example illustrated in FIG. 2, each piston 22 includes a piston body portion 22A and a piston roller 22B.

The cam 26 is an eccentric cam disposed eccentrically from an axial center O of a rotation shaft (crank shaft) 29 of the hydraulic motor 10 connected to the generator 16. While each piston 22 performs a single vertical motion, the cam 26 and the rotation shaft 29 to which the cam 26 is attached complete a single rotation.

In another embodiment, the cam 26 is an annular multi-lobed cam (ring cam) including a plurality of lobes (protrusions), in case of which each piston 22 repeats the vertical motion as many times as the number of lobes during a single rotation of the cam 26 and the rotation shaft 29 to which the cam 26 is attached.

The spool valve 30 is configured to switch a pressure of the hydraulic chamber 24 between a pressure of the high pressure oil line 12 and a pressure of the low pressure oil line 14 by being switched between the first state, in which the hydraulic chamber 24 is in communication with the high pressure oil line 12, and the second state, in which the hydraulic chamber 24 is in communication with the low pressure oil line 14.

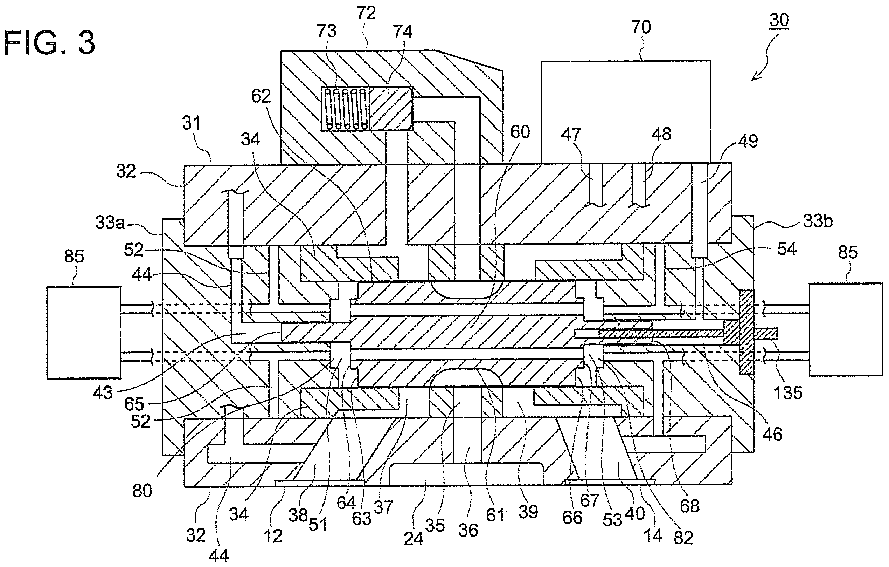

Next, with reference to FIG. 3, the configuration example of the spool valve 30 according to some embodiments will be described. FIG. 3 is a cross-sectional view of a spool valve according to some embodiments. In FIG. 3, a spool 60 is positioned at an intermediate position of a position of the spool 60 in the first state and the other position of the spool 60 in the second state.

As illustrated in FIG. 3, in some embodiments, the spool valve 30 includes a casing 31, a spool 60 accommodated in the casing 31, and the first damper chamber 80 and the second damper chamber 82 disposed between the casing 31 and the respective end surfaces of the spool 60. The specific configurations of the first damper chamber 80 and the second damper chamber 82 will be described later.

The casing 31 includes a hydraulic-chamber port 35 that communicates with the hydraulic chamber 24, a high-pressure oil port 37 that communicates with the high pressure oil line 12, and a low-pressure oil port 39 that communicates with the low pressure oil line 14. For instance, the casing 31 includes a casing body 32 formed in a cylindrical shape, a pair of side plates 33a, 33b disposed on the opposite ends of the spool 60, and a cylindrical sleeve 34 disposed radially inside the casing body 32 so as to surround the spool 60. The sleeve 34 includes the hydraulic-chamber port 35, the high pressure oil port 37 and the low pressure oil port 39. The casing body 32 includes a hydraulic chamber line 36 through which the hydraulic chamber 24 and the hydraulic-chamber port 35 communicate with each other, a high pressure oil flow channel 38 through which the high pressure oil line 12 and the high pressure oil port 37 communicate with each other, and a low pressure oil flow channel 40 through which the low pressure oil line 14 and the low pressure oil port 39 communicate with each other.

The spool 60 is configured to move inside the casing 31 in the axial direction, so as to switch a state of the hydraulic motor 10 between the first state, in which the hydraulic chamber 24 and the high pressure oil line 12 communicate with each other, and the second state, in which the hydraulic chamber 24 and the low pressure oil line 14 communicate with each other. Here, in the present specification, the axial direction refers to the axial direction of the spool 60.

Specifically, the spool 60 is formed in a cylindrical shape, and an annular groove part 61 is formed at the center portion in the axial direction of the spool 60. The annular groove part 61 is formed by an annular groove formed in the circumferential direction of the spool 60, having a diameter smaller than that of the opposite side portions in the axial direction. The circumferential surface 62 of the opposite side portions of the annular groove part 61 each have a constant diameter, so that the spool 60 is formed in a column shape except for the annular groove part 61. The first end surface 63 and the first pressure-receiving surface are formed on one end of the spool 60. For instance, the first pressure-receiving surface 65 is positioned at the center of the first end surface 63 and formed in a projection shape so as to protrude outward in the axial direction from the first end surface 63. On the other hand, the second end surface 66 and the second pressure-receiving surface 68 are formed on the other end of the spool 60. The second pressure-receiving surface 68 has an area smaller than that of the first pressure-receiving surface 65. For instance, the second pressure-receiving surface 68 is disposed at the center of the second end surface 66 and formed in a projection shape so as to protrude outward from the second end surface 66 in the axial direction.

The spool valve 30 according to some embodiments includes the following configuration as a basic configuration.

The first chamber 43 is disposed between the first pressure-receiving surface 65 and the side plate 33a of the casing 31, so that oil having a pressure P₁ flows into the first chamber 43. The first pressure-receiving surface 65 is formed so as to receive the pressure P₁ of the first chamber 43.

The second chamber 46 is disposed between the second pressure-receiving surface 68 and the side plate 33b of the casing 31, so that oil having a pressure P₁ or a pressure P₂ flows into the second chamber 46. The second pressure-receiving surface 68 is formed so as to receive the pressure P₁ or the pressure P₂ of the second chamber 46. Here, the pressure P₂ is smaller than the pressure P₁. For instance, the pressure of the high pressure oil line 12 may be used as the above the pressure P₁, and the pressure of the hydraulic chamber 24 may be used as the pressure P₂. Alternately, the pressure of the high pressure oil line 12 may be used as the above the pressure P₁, and the pressure of the low pressure oil line 14 may be used as the pressure P₂. Still alternately, the pressure of the high pressure oil line 12 may be used as the above the pressure P₁, and the pressure of a pressure of a drain tank may be used as the above pressure P₂ in a case where the spool 60 is surrounded by drain fluid having a substantially atmospheric pressure.

The spool valve 30 includes a switch valve 70 for switching oil that flows into the second chamber 46 between oil having the pressure P₁ and oil having the pressure P₂.

With this configuration, the hydraulic pressure of the second chamber 46 is switched between the pressure P₁ and the pressure P₂, which is lower than the pressure P₁, while the hydraulic pressure in the first chamber 43 is maintained at the pressure P₁, so that the spool 60 is moved in the axial direction, and a state of the spool valve 30 is switched between the first state and the second state.

Specifically, when the hydraulic pressure of the first chamber 43 is the pressure P₁ and the hydraulic chamber of the second chamber 46 is also the pressure P₁, the common pressure P₁ is applied to the first pressure-receiving surface 65 and the second pressure-receiving surface 68. However, since the area of the first pressure-receiving surface 65 is smaller than that of the second pressure-receiving surface 68, a force received by the first pressure-receiving surface 65 is smaller than a force received by the second pressure-receiving surface 68. Thus, due to the pressure difference between the first pressure-receiving surface 65 and the second pressure-receiving surface 68, the spool 60 moves from the second pressure-receiving surface 68 toward the first pressure-receiving surface 65 in the axial direction to enter the first state. In the first state, the hydraulic-chamber port 35 and the high pressure oil port 37 communicate with each other via the annular groove part 61, while communication between the hydraulic chamber port 35 and the low pressure oil port 39 is shut off by the circumferential surface 62 of the spool 60. As a result, the hydraulic chamber 24 and the high pressure oil line 12 communicate with each other in the first state.

On the other hand, when the hydraulic pressure of the first chamber 43 is the pressure P₁ and the hydraulic pressure of the second chamber 46 is the pressure P₂, the pressure P₁ is applied to the first pressure-receiving surface 65, and the pressure P₂, which is lower than the pressure P₁, is applied to the second pressure-receiving surface 68. At this time, if the second pressure P₂ is low enough, the force received by the first pressure-receiving surface 65 would be larger than the force received by the second pressure-receiving surface 68, regardless of the difference in area between the first pressure-receiving surface 65 and the second pressure-receiving surface 68. Thus, due to the pressure difference between the first pressure-receiving surface 65 and the second pressure-receiving surface 68, the spool 60 moves from the first pressure-receiving surface 65 toward the second pressure-receiving surface 68 in the axial direction to enter the second state. In the second state, the hydraulic chamber port 35 and the low pressure oil port 39 communicate with each other via the annular groove part 61, while communication between the hydraulic chamber port 35 and the high pressure oil port 37 is shut off by the circumferential surface 62 of the spool 60. As a result, the hydraulic chamber 24 and the low pressure oil line 14 communicate with each other in the second state.

Next, the more specific configuration example of the spool valve 30 will be described. The spool valve 30 is merely a configuration example, and not limited to the described configuration.

In the example illustrated in FIG. 3, the pressure of the high pressure oil line 12 is used as the pressure P₁, and the pressure of the hydraulic chamber 24 is used as the pressure P₂.

The casing 31 includes the first oil supply channel 44 branched from the high-pressure oil flow channel 38. The first oil supply channel 44 communicates with the first chamber 43. Thus, a part of the high pressure oil in the high pressure oil line 12 flows into the first chamber 43 via the high pressure oil flow channel 38 and the first oil supply channel 44.

The casing 31 includes a high-pressure branch flow channel 47 branched from the high pressure oil flow channel 38. The high-pressure branch flow channel 47 is connected to an input end of the switch valve 70. Further, the casing 31 includes a hydraulic-chamber branch flow channel 48 branched from the hydraulic chamber line 36. The hydraulic-chamber branch flow channel 48 is also connected to the input end of the switch valve 70. Furthermore, the casing 31 includes the second chamber flow channel 49 having one end connected to an output end of the switch valve 70 and the other end connected to the second chamber 46. The second chamber flow channel 49 is configured to selectively communicate with the high pressure branch flow channel 47 or the hydraulic-chamber branch flow channel 48 via the switch valve 70.

The spool valve 30 may include a relief valve 72.

In one configuration example, the relief valve 72 includes a spring 73 and a poppet valve 74. The poppet valve 74 is configured to be biased by the spring 73. When the pressure of the hydraulic chamber 24 exceeds the setting pressure which is the pressure of the high pressure oil line 12 or higher, the poppet valve 74 opens so that the hydraulic chamber 24 and the high pressure oil line 12 communicate with each other. For instance, if the spool 60 is at a position such that the hydraulic chamber 24 is in communication with neither the high pressure oil line 12 nor the low pressure oil line 14 when powders such as metal powders contained in oil have got stuck inside the spool valve 30 and the spool 60 has stopped operating, the pressure of the hydraulic chamber 24 may become excessively high. In this regard, providing the relief valve 72 makes it possible to maintain the pressure of the hydraulic chamber 24 at the setting pressure or lower even in a case where the spool 60 is not operating.

The first drain chamber 51 and the second drain chamber 53 may be formed between the casing 31 and the spool valve 30.

In one configuration, the first drain chamber 51 is formed between the first end surface 63 of the spool 60 and the casing 31, and is filled with low-pressure drain oil. The second drain chamber 53 is formed between the second end surface 66 of the spool 60 and the casing 31, and is filled with low-pressure drain oil. In the example illustrated in FIG. 3, the low pressure oil is used as the drain oil. In this case, the first drain chamber 51 and the low pressure oil line 14 communicate with each other through the first drain flow channel 52, and the second drain chamber 53 and the low pressure oil line 14 communicate with each other through the second drain flow channel 54.

The spool valve 30 may include a position sensor 135.

In one configuration example, the position sensor 135 is configured to determine the position of the spool 60 in the axial direction. For example, the position sensor 135 is disposed in the second chamber 46. An eddy-current type displacement sensor may be used as the position sensor 135, for instance. In this case, the position sensor 135 is a coil sensor, and a high-frequency signal of approximately few MHz is supplied to the position sensor 135 from an oscillation circuit (not illustrated). When the distance between the position sensor 135 and a copper tube attached to the spool 60 as a target metal varies while the high-frequency signal is supplied to the position sensor 135, the eddy current on the surface of the copper tube changes in accordance with the variation in the distance. As a result, it is possible to detect the displacement of the spool 60 from the impedance change of the position sensor 135 due to the change in the eddy current.

In the spool valve 30 having the above configuration, when the first state and the second state are switched, i.e., when the spool 60 moves, there is a risk that the spool 60 collides with the casing 31 at a high speed to cause a trouble such as a breakage of a casing component, a peripheral member of the casing, or the spool itself. Thus, the spool valve 30 according to the present embodiment further includes the following configuration for smooth movement of the spool 60.

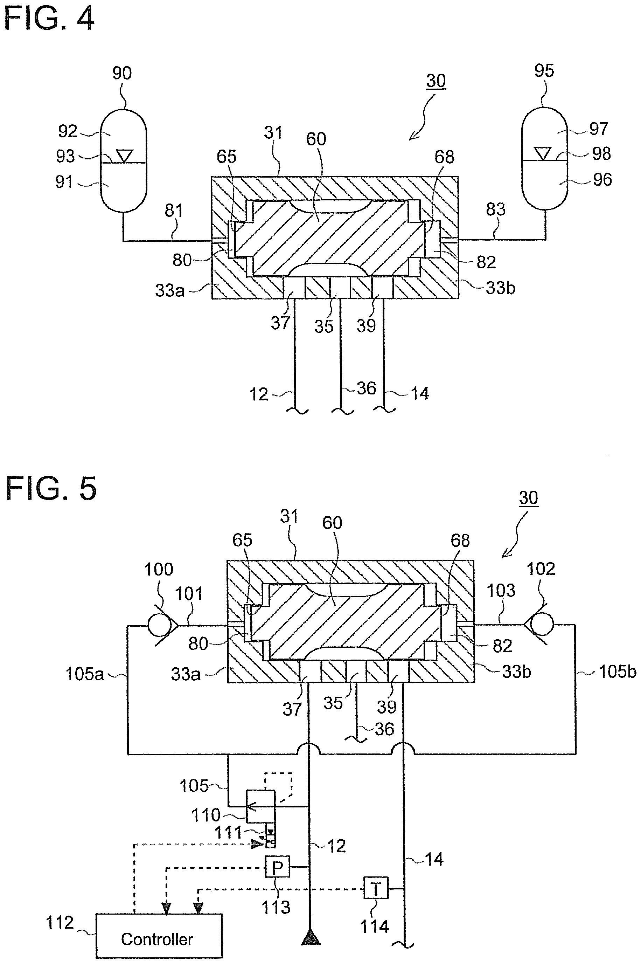

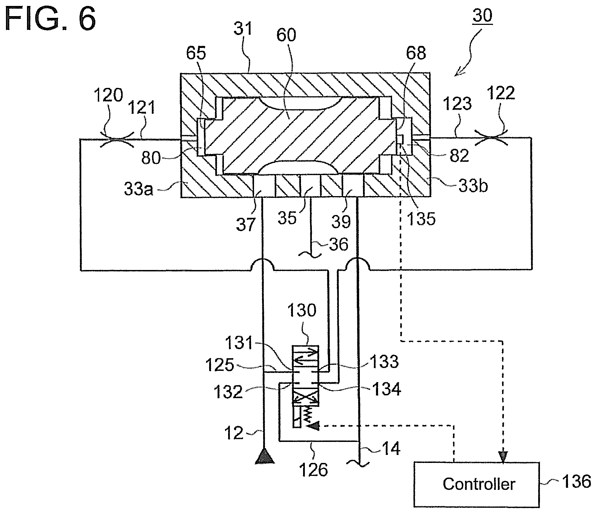

FIG. 4 is a schematic configuration diagram of a spool valve according to one embodiment. FIG. 5 is a schematic configuration diagram of a spool valve according to another embodiment. FIG. 6 is a schematic configuration diagram of a spool valve according to yet another embodiment.

In some embodiments, as illustrated in FIGs. 3 to 6, the spool valve 30 includes a pair of the first damper chamber 80 and the second damper chamber 82 configured to decelerate the spool 60 when the spool 60 reaches a position immediately before the stroke end. The first damper chamber 80 is formed between the first end surface 63 of the spool 60 and the side plate 33a facing the first end surface 63. For instance, the first end surface 63 includes the first projecting portion 64 formed so as to protrude outward in the axial direction at the center. The first damper chamber 80 is configured in a shape corresponding to the first projecting portion 64. Similarly, the second damper chamber 82 is formed between the second end surface 66 of the spool 60 and the side plate 33b facing the second end surface 66. For instance, the second end surface 66 includes the second projecting portion 67 formed so as to protrude outward in the axial direction at the center, and the second damper chamber 82 is configured in a shape corresponding to the second projecting portion 67.

With the above configuration, for switching the spool valve 30 between the first state and the second state, the spool 60 is decelerated by oil (e.g. working oil) stored in the first damper chamber 80 and the second damper chamber 82 when the spool 60 is moved in the axial direction to reach a position immediately before the stroke end. Thus, it is possible to prevent the spool 60 from colliding with the side plate 33a, 33b at a high speed, and to avoid occurrence of a trouble such as breakage of a casing component, a peripheral component of the casing, or the spool itself.

The spool valve 30 further includes a damper-effect adjustment part 85 (see FIG. 3) configured to be capable of varying the effect to decelerate the spool 60 achieved by the first damper chamber 80 and the second damper chamber 82.

The viscosity of the oil may differ depending on, for instance, the type of the oil in the first damper chamber 80 and the second damper chamber 82, or the operation temperature of the spool valve 30. In this case, it is difficult to obtain a constant damper effect consistently. Specifically, when the oil temperature increases and the viscosity decreases, the damper effect is reduced and deceleration of the spool 60 may be insufficient.

In view of this, with the above configuration, it is possible to adjust the damper effect by the damper-effect adjustment part 85, which makes it possible to appropriately decelerate the spool 60 in accordance with the type of the oil in the first damper chamber 80 and the second damper chamber 82, the operation environment (e.g. the oil temperature) of the spool valve 30, or the like.

As illustrated in FIG. 4, in the spool valve 30 according to one embodiment, the above damper-effect adjustment part 85 (see FIG. 3) includes a pair of the first accumulator 90 and the second accumulator 95 which respectively correspond to the first damper chamber 80 and the second damper chamber 82.

The first accumulator 90 includes an oil chamber 91 that communicates with the first damper chamber 80, and a gas chamber 92 disposed separately from the oil chamber 91 across a deformable bladder 93. The oil chamber 91 and the first damper chamber 80 are connected to each other via the first flow channel 81.

The second accumulator 95 includes an oil chamber 96 that communicates with the second damper chamber 82, and a gas chamber 97 disposed separately from the oil chamber 96 across a deformable bladder 98. The oil chamber 96 and the second damper chamber 82 are connected to each other via the second flow channel 83.

With the above configuration, it is possible to make the oil-column spring strength in the first damper chamber 80 and the second damper chamber 82 variable, by changing the volume of gas in the first accumulator 90 and the second accumulator 95 in accordance with the operation pressure of the spool valve 30, the type of the oil in the first damper chamber 80 and the second damper chamber 82, the operation environment (e.g. oil temperature) of the spool valve 30, or the like. Further, since the damper-effect adjustment part includes the first accumulator 90 and the second accumulator 95 respectively connected to the first damper chamber 80 and the second damper chamber 82, it is possible to decelerate the spool 60 appropriately with a simplified configuration.

As illustrated in FIG. 5, in the spool valve 30 according to another embodiment, the damper-effect adjustment part 85 (see FIG. 3) includes the first check valve 100 and the second check valve 102 respectively corresponding to the first damper chamber 80 and the second damper chamber 82, high-pressure branch lines 105, 105a, 105b branched from the high pressure oil line 12, and a variable pressure-reducing valve 110 disposed on the high-pressure branch line 105.

The high pressure branch line 105 has one end connected to the high pressure oil line 12 and the other end branched into the high pressure branch lines 105a, 105b.

The first flow channel 101 connected to the first damper chamber 80 is disposed at the upstream side of the first check valve 100, and the high pressure branch line 105a branched from the high pressure oil line 12 is disposed at the downstream side of the first check valve 100. The first check valve 100 is configured to prevent the oil from flowing into the first damper chamber 80, and to open and allow the oil to flow out from the first damper chamber 80 when the pressure in the first damper chamber 80 becomes not less than the cracking pressure.

The second flow channel 103 connected to the second damper chamber 82 is disposed at the upstream side of the second check valve 102, and the high pressure branch line 105b branched from the high pressure oil line 12 is disposed at the downstream side of the second check valve 102. The second check valve 102 is configured to prevent the oil from flowing into the second damper chamber 82, and to open and allow the oil to flow out from the second damper chamber 82 when the pressure in the second damper chamber 82 becomes not less than the cracking pressure.

The upstream sides of the first check valve 100 and the second check valve 102 are sides closer to the first damper chamber 80 and the second damper chamber 82, and the downstream sides are sides farther from the first damper chamber 80 and the second damper chamber 82.

The variable pressure-reducing valve 110 is disposed in the high pressure branch line 105 and configured to reduce the pressure in the high pressure branch line 105 to adjust the cracking pressure of the first check valve 100 and the second check valve 102. The variable pressure-reducing valve 110 may be configured to adjust the amount of pressure decrease in the high pressure branch line 105 on the basis of a measurement value which is at least one of the oil temperature or the pressure in the high pressure oil line 12.

Specifically, the variable pressure-reducing valve 110 is configured such that the setting pressure is controlled by a solenoid valve 111 on the basis of a command of a controller 112. At least one of the pressure of the high pressure oil in the high pressure oil line 12 measured by a pressure meter 113 or the temperature of the low pressure oil in the low pressure oil line 14 measured by a thermometer 114 is inputted into the controller 112. Here, the thermometer 114 may not be limitedly disposed in the low pressure oil line 14. For instance, a thermometer may be disposed in the high pressure oil line 12. Alternately, in a case where a storage tank for storing oil is connected to the low pressure oil line 14, the oil temperature in the storage tank may be measured.

The controller 112 calculates the setting pressure of the variable pressure-reducing valve 110 based on the inputted signals, and sends the setting pressure signal to the solenoid valve 111. The solenoid valve 111 controls the setting pressure of the variable pressure-reducing valve 110 based on the setting pressure signal. In this way, the pressures in the high pressure branch lines 105a, 105b disposed at the downstream sides of the first damper chamber 80 and the second damper chamber 82 are changed. As a result, the cracking pressures of the first check valve 100 and the second check valve 102 are also changed.

With the above configuration, the variable pressure-reducing valve 110 changes the pressures at the downstream sides of the first check valve 100 and the second check valve 102, which makes it possible to adjust the damper effect achieved by the first damper chamber 80 and the second damper chamber 82 in accordance with the operation pressure of the spool valve 30, the type of oil in the first damper chamber 80 and the second damper chamber 82, or the operation environment (e.g. oil temperature) of the spool valve 30, for instance. Further, controlling the variable pressure-reducing valve 110 on the basis of a measurement value of at least one of the oil temperature or the pressure in the high pressure oil line 12 enables an automatic control of the variable pressure-reducing valve 110, which makes it possible to optionally adjust the performance of the damper even if the environment of the casing 31 changes.

As illustrated in FIG. 6, in the spool valve 30 according to another embodiment, the damper-effect adjustment part 85 (see FIG. 3) includes a pair of the first orifice 120 and the second orifice 122 respectively corresponding to the first damper chamber 80 and the second damper chamber 82, a switch valve 130 for switching pressures at the downstream sides of the first orifice 120 and the second orifice 122, and a position sensor 135 for determining the position of the spool 60.

The upstream sides of the first check valve 100 and the second check valve 102 are sides closer to the first damper chamber 80 and the second damper chamber 82, and the downstream sides are sides farther from the first damper chamber 80 and the second damper chamber 82.

The first orifice 120 is disposed in the first flow channel 121 communicating with the first damper chamber 80. The second orifice 122 is disposed in the second flow channel 123 communicating with the second damper chamber 82.

The check valve 130 includes a supply port 131, a tank port 132, the first control port 133, and the second control port 134. The supply port 131 communicates with the high pressure oil line 12 via a high pressure branch line 125. The tank port 132 communicates with the low pressure oil line 14 via a low pressure branch line 126. The control port 133 communicates with the first flow channel 121 via the first orifice 120. The second control port 134 communicates with the second flow channel 123 via the second orifice 122.

The position sensor 135 detects a position of the spool 60 in the axial direction, and transmits the detection signal to a controller 136.

The controller 136 is configured to switch the communication state among the ports of the switch valve 130 between a state in which the first control port 133 communicates with the supply port 131 and the second control port 134 communicates with the tank port 132, and a state in which the second control port 134 communicates with the supply port 131 and the first control port 133 communicates with the tank port 132, on the basis of the detection signal.

For instance, when the position sensor 135 has detected that the spool 60 is displaced toward the first damper chamber 80, the controller 136 controls the switch valve 130 so that the first control port 133 communicates with the supply port 131 and the second control port 134 communicates with the tank port 132. As a result, the pressure at the downstream side of the first orifice 120 rises so that the high pressure oil is supplied to the first damper chamber 80 via the first orifice 120, which makes it possible to decelerate the spool 60 which moves toward the first damper chamber 80. On the other hand, when the position sensor 135 has detected that the spool 60 is displaced toward the second damper chamber 82, the controller 136 controls the switch valve 130 so that the second control port 134 communicates with the supply port 131 and the first control port 133 communicates with the tank port 132. In this way, the pressure at the downstream side of the second orifice 122 rises so that the high pressure oil is supplied to the second damper chamber 82 via the second orifice 122, which makes it possible to decelerate the spool 60 moving toward the second damper chamber 82. Here, the check valve 130 is configured to return to an intermediate position between the first state and the second state once the position of the spool 60 detected by the position sensor 135 reaches a predetermined position. The switch valve 130 may be configured to switch the communication state between the ports on the basis of the displacement of the spool 60, the velocity based on displacement of the spool 60, or the acceleration based on the displacement of the spool 60.

With the above configuration, the high-pressure oil is supplied to the first damper chamber 80 and the second damper chamber 82 in response to the detection signal of the position sensor 135, which makes it possible to appropriately decelerate the spool 60. Further, since the position sensor 135 is used, it is possible to optionally adjust the operation timing of the switch valve 130.

In the above embodiment, if the spool 60 gets stuck at the intermediate position while the spool valve 30 is in operation, the pressure in the hydraulic chamber 24 becomes high when the piston is ascending, and becomes low when the piston is descending, which may generate abnormal vibration in the hydraulic motor 10 and damage the hydraulic motor 10, for instance.

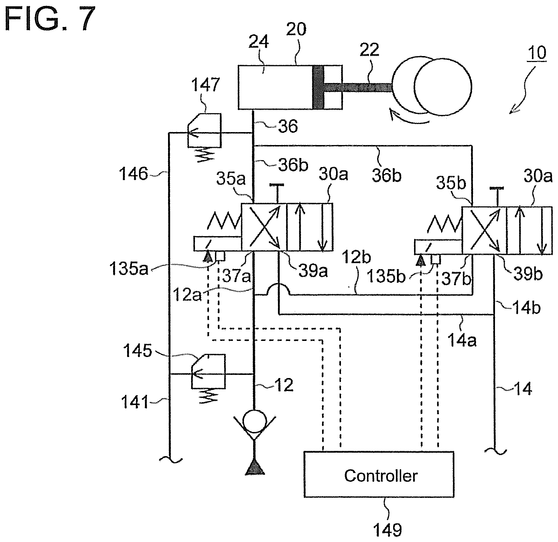

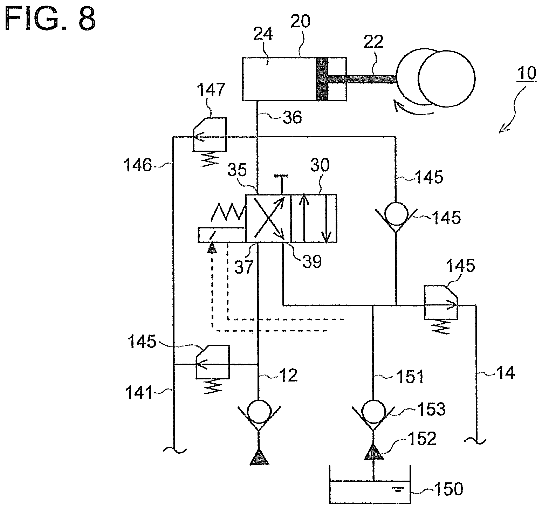

Thus, in order to prevent generation of a serious trouble in the hydraulic motor 10 caused by sticking of the spool 60, the hydraulic motor 10 (in FIGs. 2 and 3, the hydraulic motor 10 is illustrated) according to the present embodiment may include the following configuration. FIGs. 7 and 8 are each a schematic configuration diagram of the hydraulic motor 10 according to some embodiments.

FIG. 7 is a schematic configuration diagram of the hydraulic motor 10 according to one embodiment.

As illustrated in the drawing, the hydraulic motor 10 according to one embodiment includes the hydraulic chamber 24, the high pressure oil line 12, the low pressure oil line 14, the hydraulic chamber 24, and a plurality of spool valves 30a, 30b connected in parallel to the high pressure oil line 12 and the low pressure oil line 14. In this case, the capacity of each of the spool valves 30a, 30b may be small as compared to that in a case where the hydraulic motor 10 includes only one spool valve 30 as illustrated in FIG. 8 described below. While there are two spool valves 30a, 30b in the illustrated example, two or more spool valves may be provided.

The spool valves 30a, 30b each include a hydraulic-chamber port 35a, 35b, a high-pressure oil port 37a, 37b, and a low pressure oil port 39a, 39b. The hydraulic-chamber ports 35a, 35b are connected to the hydraulic chamber 24 via the respective hydraulic-chamber branch lines 36a, 36b branched from the hydraulic-chamber line 36. The high pressure oil ports 37a, 37b are connected to the high pressure oil line 12 via the respective high pressure branch lines 12a, 12b branched from the high pressure oil line 12. The low-pressure oil ports 39a, 39b are connected to the low-pressure oil line 14 via the low-pressure branch lines 14a, 14b branched from the low pressure oil line 14.

A relief line 141 for discharging high-pressure oil is connected to the high pressure oil line 12. The high-pressure oil is discharged through the relief line 141 via a relief valve 145 if the high-pressure oil inside the high-pressure oil line 12 becomes not less than a setting pressure. Further, a relief line 146 for discharging working oil is connected to the hydraulic-chamber line 36. The working oil in the hydraulic chamber 24 is discharged through the relief line 146 via relief valve 147 if working oil in the hydraulic chamber 24 or the hydraulic-chamber line 36 becomes not less than a setting pressure. The relief line 141 or the relief line 146 may be connected to the low pressure oil line 14 at the other ends, or may be connected to a storage tank 150 described below.

Further, the hydraulic motor 10 includes a plurality of position sensors 135a, 135b, respectively disposed on the spool valves 30a, 30b, for detecting the position of the spool 60 (see FIG. 3) in the axial direction inside the casing 31, and a controller 149 for controlling the spool valves 30a, 30b based on the detection signals detected by the position sensors 135a, 135b.

When it is determined that the spool 60 has got stuck in at least one of the spool valves 30a, 30b from the detection signals detected by the position sensors 135a, 135b, the controller 149 controls the state of the other one of the spool valves 30a, 30b in which sticking has not occurred, to enter the second state. In the second state, the hydraulic chamber 24 is in communication with the low pressure oil line 14.

For instance, the controller 149 monitors the opening/closing command for each spool valve 30a, 30b and the detection signals detected by the position sensors 135a, 135b. As described above, the detection signals detected by the position sensors 135a, 135b may be the displacement (position) of the spool 60, the velocity based on the displacement of the spool 60, or acceleration based on the displacement of the spool 60. Then, a difference between the opening/closing command of each spool valve 30a, 30b and the detection signals of the spool 60 is calculated, and it is determined that sticking has occurred in one of the spool valves 30a, 30b in which the difference is greater than a threshold value. If it is determined that sticking has occurred in the spool valve 30a, the controller 149 controls the other spool valve 30b, in which sticking has not occurred, to enter the second state. In this way, it is possible to prevent the pressure in the hydraulic chamber 24 from rising excessively high even if sticking has occurred while the high pressure oil line 12 and the hydraulic chamber 24 are in communication in the spool valve 30a, because the hydraulic chamber 24 and the low pressure oil line 14 are in communication in the other spool valve 30b in which sticking has not occurred. That is, it is possible to prevent occurrence of a serious trouble in the hydraulic motor 10 because it is possible to maintain the pressure in the hydraulic chamber 24 at an appropriate pressure even if an operation error such as sticking of the spool 60 has occurred in one of the spool valves 30a, 30b.

FIG. 8 is a schematic configuration diagram of the hydraulic motor 10 according to another embodiment.

As illustrated in the drawing, the hydraulic motor 10 according to another embodiment includes the hydraulic chamber 24, the high pressure oil line 12, the low pressure oil line 14, and the spool valve 30.

The spool valve 30 includes a hydraulic-chamber port 35 connected to the hydraulic chamber 24 via the hydraulic-chamber line 36, the high pressure oil port 37 connected to the high pressure oil line 12, and the low pressure oil port 39 connected to the low pressure oil line 14. A relief line 141 for discharging high-pressure oil is connected to the high pressure oil line 12. The high-pressure oil is discharged through the relief line 141 via a relief valve 145 if the high-pressure oil inside the high-pressure oil line 12 becomes not less than a setting pressure. Further, a relief line 146 for discharging working oil is connected to the hydraulic-chamber line 36. The working oil in the hydraulic-chamber line 24 is discharged through the relief line 146 via a relief valve 147 if working oil in the hydraulic chamber 24 or the hydraulic-chamber line 36 becomes not less than a setting pressure. The relief line 141 or the relief line 146 may be connected to the low pressure oil line 14 at the other ends, or may be connected to a storage tank 150 described below.

Further, the hydraulic motor 10 further includes a storage tank 150 for storing oil, a low pressure oil supply line 151 for connecting the storage tank 150 and the low pressure oil line 14, a boost pump 152 and a check valve 153 disposed in the low pressure oil supply line 151, a spool bypass line 155 for connecting the low pressure oil line 14 and the hydraulic chamber line 36 so as to bypass the spool valve 30, and a check valve 156 disposed in the spool bypass line 155.

The boost pump 152 is configured to increase the pressure of oil in the storage tank 150 and to supply the oil to the low pressure oil line 14. The check valve 153 is disposed at the downstream side of the boost pump 152, and configured to prevent the low pressure oil from flowing backward from the low pressure oil line 14 to the storage tank 150 through the low pressure oil supply line 151.

The check valve 156 disposed in the spool bypass line 155 is configured to prevent an oil flow from the hydraulic-chamber line 36 toward the low pressure oil line 14, as well as to open and allow an oil flow from the low pressure oil line 14 toward the hydraulic-chamber line 36 when the pressure in the hydraulic-chamber line 36 has become not more than the cracking pressure.

For instance, in a case where the spool 60 has got stuck at the intermediate position between the first state and the second state, the pressure in the hydraulic chamber 24 may become a negative pressure. In this case, a trouble may occur, such as abnormal vibration in the hydraulic motor 10.

In this regard, with the above configuration, the check valve 156 opens when the pressure in the hydraulic-chamber line 36 reaches the cracking pressure or higher, and the low pressure oil is supplied from the low pressure oil line 14 to the hydraulic chamber 24 via the hydraulic chamber line 36. In this way, it is possible to prevent the pressure in the hydraulic chamber 24 from abnormally decreasing and to maintain the pressure in the hydraulic chamber 24 at an appropriate pressure, which makes it possible to prevent occurrence of a serious trouble in the hydraulic motor 10.

The configuration illustrated in FIG. 8 may be applied to the configuration illustrated in FIG. 7.

Specifically, the hydraulic motor 10 illustrated in FIG. 7 may further include a storage tank 150 for storing oil, a low pressure oil supply line 151 for connecting the storage tank 150 and the low pressure oil line 14, a boost pump 152 and a check valve 153 disposed in the low pressure oil supply line 151, a spool bypass line 155 for connecting the low pressure oil line 14 and the hydraulic chamber line 36 so as to bypass the spool valves 30a, 30b, and a check valve 156 disposed in the spool bypass line 155, as described above with reference to FIG. 8.

According to the above described at least one embodiment, it is possible to prevent the spool 60 from colliding with the side plates 33a, 33b at a high speed when the flow channel is switched, thanks to the damper effect achieved by the first damper chamber 80 and the second damper chamber 82 disposed on the side plates 33a, 33b of the casing 31. Thus, it is possible to avoid occurrence of a trouble such as breakage or the like of a casing component, its peripheral component or the spool itself.

Embodiments of the present invention were described in detail above, but the present invention is not limited thereto, and various amendments and modifications may be implemented within a scope that does not depart from the present invention.

For instance, while the hydraulic motor 10 of the wind turbine power generating apparatus 1 has been described as an example of a hydraulic machine in the above embodiment, the hydraulic machine of the present embodiment may be applied to other apparatuses which use a hydraulic machine besides the wind turbine power generating apparatus 1. Further, a hydraulic machine to which the spool valves 30, 30a, 30b of the present embodiment are applied may be applied to other hydraulic machines such as the hydraulic pump 8.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

Further, for instance, an expression of an equal state such as "same" "equal" and "uniform" shall not be construed as indicating only the state in which the feature is strictly equal, but also includes a state in which there is a tolerance or a difference that can still achieve the same function.

Still further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A spool valve (30) used in a hydraulic machine including a hydraulic chamber (24), a high-pressure oil line (12) and a low-pressure oil line (14), the spool valve (30) comprising:
a casing (31) which includes a hydraulic-chamber port (35) communicating with the hydraulic chamber (24), a high-pressure port (37) communicating with the high-pressure oil line (12), and a low-pressure port (39) communicating with the low-pressure oil line (14);
a spool (60) configured to a switch a state of the hydraulic machine between a first state in which the hydraulic chamber (24) and the high-pressure oil line (12) are in communication and a second state in which the hydraulic chamber (24) and the low-pressure oil line (14) are in communication, by moving in an axial direction of the spool (60) inside the casing (31); and
a pair of damper chambers (80, 82) disposed between respective end surfaces (63, 66) of the spool (60) and respective side plates (33) of the casing (31) which face the end surfaces (63, 66), and configured to decelerate the spool (60) when the spool (60) reaches a position immediately before a stroke end,
the spool valve (30) being **characterized in that** it further comprises a damper-effect adjustment part (85) configured to be capable of varying a deceleration effect on the spool (60) achieved by the pair of damper chambers (80, 82).

2. The spool valve (30) according to claim 1,
wherein the damper-effect adjustment part (85) includes a pair of accumulators (90, 95) provided respectively corresponding to the pair of damper chambers (80, 82), and
wherein each accumulator (90, 95) includes an oil chamber (91) communicating with corresponding one of the damper chambers (80, 82), and a gas chamber (92) disposed separately from the oil chamber (91) across a deformable bladder (93).

3. The spool valve (30) according to claim 1,
wherein the damper-effect adjustment part (85) includes:
a pair of check valves (100, 102) provided respectively corresponding to the pair of damper chambers (80, 82), each of the check valves (100, 102) being configured to prevent a flow of an oil into the corresponding damper chamber (80, 82) and to open to allow an outflow of the oil from the corresponding damper chamber (80, 82) when a pressure in the corresponding damper chamber (80, 82) reaches a cracking pressure or higher;
a high-pressure branch line (105) branched from the high-pressure oil line (12) and connected to a downstream side of the pair of check valves (100, 102), and
a variable pressure-reducing valve (110) disposed in the high-pressure branch line (105), and configured to adjust the cracking pressure of the check valves (100, 102) by reducing a pressure in the high-pressure branch line (105).

4. The spool valve (30) according to claim 3,
wherein the variable pressure-reducing valve (110) is configured to adjust an amount of pressure decrease in the high-pressure branch line (105) on the basis of a measurement value of at least one of a temperature of the oil or the pressure in the high-pressure oil line (12).

5. The spool valve (30) according to claim 1,
wherein the damper-effect adjustment part (85) includes:
a pair of orifices (120, 122) provided respectively corresponding to the pair of damper chambers (80, 82); and
a switch valve (130) including a supply port (131) communicating with the high-pressure oil line (12), a tank port (132) communicating with the low-pressure oil line (14), a first control port (133) and a second control port (134), the first control port (133) and the second control port (134) each communicating with a downstream side of corresponding one of the pair of orifices (120, 122), and
wherein the switch valve (130) is configured to switch a port communication state between a state in which the first control port (133) is in communication with the supply port (131) and the second control port (134) is in communication with the tank port (132), and a state in which the second control port (134) is in communication with the supply port (131) and the first control port (133) is in communication with the tank port (132).

6. The spool valve (30) according to claim 5, further comprising
a position sensor (135) for detecting a position of the spool (60) in the casing (31),
wherein the switch valve (130) of the damper-effect adjustment part (85) is configured to switch the port communication state on the basis of a detection signal of the position sensor (135).

7. A hydraulic machine comprising:
at least one spool valve (30) according to any one of claims 1 to 6;
the hydraulic chamber (24);
the high pressure oil line (12); and
the low pressure oil line (14).

8. The hydraulic machine according to claim 8, wherein the at least one spool valve (30) comprises a plurality of the spool valves (30, 30a, 30b) connected in parallel to the hydraulic chamber (24), the high-pressure oil line (12) and the low-pressure oil line (14).

9. The hydraulic machine according to claim 8, further comprising
a plurality of position sensors (135) for detecting positions of the spools in the casing (31), the position sensors (135) being disposed on the respective spool valves (30, 30a, 30b); and
a controller (136) configured to control, when it is determined that sticking of a spool (60) has occurred in at least one of the plurality of spool valves (30, 30a, 30b), other ones of the spool valves (30, 30a, 30b) in which the sticking has not occurred to enter the second state, based on detection signals of the position sensors (135).

10. The hydraulic machine according to any one of claims 7 to 9, further comprising:
a storage tank (150) for storing the oil;
a boost pump (152) for increasing a pressure of the oil in the storage tank (150) and supplying the oil to the low-pressure oil line (14);
a hydraulic-chamber line (36) for connecting the hydraulic-chamber port (35) of each spool valve (30, 30a, 30b) and the hydraulic chamber (24);
a spool bypass line (155) for connecting the low-pressure oil line (14) and the hydraulic-chamber line (36) so as to bypass the spool valves (30, 30a, 30b); and
a check valve (153) disposed in the spool bypass line (155) and configured to prevent a flow of an oil into the low-pressure oil line (14) from the hydraulic-chamber line (36), and to open to allow a flow of the oil from the low-pressure oil line (14) toward the hydraulic-chamber line (36) when a pressure in the hydraulic-chamber line (36) reaches a cracking pressure or lower.

11. A wind turbine power generating apparatus (1), comprising:
a wind turbine rotor (3);
a generator (16);
a hydraulic pump (8) configured to be driven by the wind turbine rotor (3) to increase a pressure of the oil and to discharge a high-pressure oil to the high pressure oil line (12);
a hydraulic motor (10) configured to be driven by the high-pressure oil received from the hydraulic pump (8) via the high pressure oil line (12) and to input mechanical energy to the generator (16), the hydraulic motor having an outlet connected to an inlet of the hydraulic pump (8),
wherein at least one of the hydraulic pump (8) or the hydraulic motor (10) is the hydraulic machine according to any one of claims 7 to 10.

## Patentansprüche

1. Schieberventil (30) zur Verwendung in einer hydraulischen Maschine, die eine Hydraulikkammer (24), eine Hochdruckölleitung (12) und eine Niederdruckölleitung (14) beinhaltet, das Schieberventil (30) umfassend:
ein Gehäuse (31), das einen Hydraulikkammeranschluss (35), der mit der Hydraulikkammer (24) kommuniziert, einen Hochdruckanschluss (37), der mit der Hochdruckölleitung (12) kommuniziert, und einen Niederdruckanschluss (39), der mit der Niederdruckölleitung (14) kommuniziert, beinhaltet,
einen Schieber (60), der konfiguriert ist, einen Zustand der hydraulischen Maschine zwischen einem ersten Zustand, in dem die Hydraulikkammer (24) und die Hochdruckölleitung (12) in Verbindung stehen, und einem zweiten Zustand, in dem die Hydraulikkammer (24) und die Niederdruckölleitung (14) sind Verbindung stehen, durch Bewegen des Schiebers (60) in dem Gehäuse (31) in einer axialen Richtung umzuschalten, und
ein Paar Dämpfungskammern (80, 82), die zwischen jeweiligen Endflächen (63, 66) des Schiebers (60) und jeweiligen Seitenplatten (33) des Gehäuses (31), die den Endflächen (63, 66) zugewandt sind, angeordnet sind und konfiguriert sind, den Schieber (60) zu verlangsamen, wenn der Schieber (60) eine Position unmittelbar vor einem Hubende erreicht,
wobei das Schieberventil (30) **dadurch gekennzeichnet ist, dass** es ferner einen Dämpfungswirkung-Anpassungsteil (85) umfasst, der konfiguriert ist, imstande zu sein, eine Verlangsamungswirkung auf den Schieber (60), die durch das Paar Dämpfungskammern (80, 82) erreicht wird, zu variieren.

2. Schieberventil (30) nach Anspruch 1,
wobei der Dämpfungswirkung-Anpassungsteil (85) ein Paar Akkumulatoren (90, 95) beinhaltet, die jeweils entsprechend dem Paar Dämpfungskammern (80, 82) bereitgestellt sind, und
wobei jeder Akkumulator (90, 95) eine Ölkammer (91), die mit einer entsprechenden der Dämpfungskammern (80, 82) kommuniziert, und einen Gasraum (92), der getrennt von der Ölkammer (91) jenseits einer verformbaren Blase (93) angeordnet ist, beinhaltet.

3. Schieberventil (30) nach Anspruch 1,
wobei der Dämpfungswirkung-Anpassungsteil (85) beinhaltet:
ein Paar Rückschlagventile (100, 102), die jeweils entsprechend dem Paar Dämpfungskammern (80, 82) bereitgestellt sind, wobei jedes der Rückschlagventile (100, 102) konfiguriert ist, einen Fluss eines Öls in die entsprechende Dämpfungskammer (80, 82) zu verhindern und sich zu öffnen, um einen Ausfluss des Öls aus der entsprechenden Dämpfungskammer (80, 82) zu erlauben, wenn ein Druck in der entsprechenden Dämpfungskammer (80, 82) einen Öffnungsdruck oder höher erreicht,
eine Hochdruckzweigleitung (105), die von der Hochdruckölleitung (12) abzweigt und mit einer stromabwärtigen Seite des Paares Rückschlagventile (100, 102) verbunden ist, und
ein Ventil zur Verringerung des variablen Drucks (110), das in der Hochdruckzweigleitung (105) angeordnet ist und konfiguriert ist, den Öffnungsdruck der Rückschlagventile (100, 102) durch Verringern eines Drucks in der Hochdruckzweigleitung (105) anzupassen.

4. Schieberventil (30) nach Anspruch 3,
wobei das Ventil zur Verringerung des variablen Drucks (110) konfiguriert ist, einen Betrag der Druckabnahme in der Zweigleitung (105) auf der Grundlage eines Messwertes von mindestens einem von einer Temperatur des Öls oder dem Druck in der Hochdruckölleitung (12) anzupassen.

5. Schieberventil (30) nach Anspruch 1,
wobei das Dämpfungswirkung-Anpassungsteil (85) beinhaltet:
ein Paar Öffnungen (120, 122), das jeweils entsprechend dem Paar Dämpfungskammern (80, 82) bereitgestellt ist, und
ein Umschaltventil (130), das einen Versorgungsanschluss (131), der mit der Hochdruckölleitung (12) kommuniziert, einen Tankanschluss (132), der mit der Niederdruckölleitung (14) kommuniziert, einen ersten Steueranschluss (133) und einen zweiten Steueranschluss (134) beinhaltet, wobei der erste Steueranschluss (133) und der zweite Steueranschluss (134) jeweils mit einer stromabwärtigen Seite eines entsprechenden des Paares von Öffnungen (120, 122) kommunizieren, und
wobei das Umschaltventil (130) konfiguriert ist, einen Anschlusskommunikationszustand zwischen einem Zustand, in dem der erste Steueranschluss (133) in Kommunikation mit dem Ventil (131) ist und der zweite Steueranschluss (134) in Kommunikation mit dem Tankanschluss (132) ist, und einem Zustand, in dem der zweite Steueranschluss (134) in Kommunikation mit dem Versorgungsanschluss (131) ist und der erste Steueranschluss (133) in Kommunikation mit dem Tankanschluss (132) ist, umzuschalten.

6. Schieberventil (30) nach Anspruch 5, ferner umfassend
einen Positionssensor (135) zum Erkennen einer Position des Schiebers (60) in dem Gehäuse (31),
wobei das Umschaltventil (130) des Dämpfungswirkung-Anpassungsteils (85) konfiguriert ist, den Anschlusskommunikationszustand auf der Grundlage eines Detektionssignals des Positionssensors (135) umzuschalten.

7. Hydraulische Maschine, umfassend:
mindestens ein Schieberventil (30) nach einem der Ansprüche 1 bis 6,
die Hydraulikkammer (24),
die Hochdruckölleitung (12) und
die Niederdruckölleitung (14).

8. Hydraulische Maschine nach Anspruch 8, wobei das mindestens eine Schieberventil (30) mehrere Schieberventile (30, 30a, 30b) umfasst, die mit der Hydraulikkammer (24), der Hochdruckölleitung (12) und der Niederdruckölleitung (14) parallelgeschaltet sind.

9. Hydraulische Maschine nach Anspruch 8, ferner umfassend
mehrere Positionssensoren (135) zum Erkennen von Positionen der Schieber in dem Gehäuse (31), wobei die Positionssensoren (135) auf den jeweiligen Schieberventilen (30, 30a, 30b) angeordnet sind, und
eine Steuerung (136), die konfiguriert ist, wenn bestimmt wird, dass ein Stocken des Schiebers (60) in mindestens einem der mehreren Schieberventile (30, 30a, 30b) aufgetreten ist, andere der Schieberventile (30, 30a, 30b), bei denen das Stocken nicht aufgetreten ist, basierend auf Detektionssignalen der Positionssensoren (135) so zu steuern, dass diese in den zweiten Zustand übergehen.

10. Hydraulische Maschine nach einem der Ansprüche 7 bis 9, ferner umfassend:
einen Speichertank (150) zum Speichern des Öls,
eine Druckerhöhungspumpe (152) zum Erhöhen eines Drucks des Öls in dem Speichertank (150) und Zuführen des Öls zu der Niederdruckölleitung (14),
eine Hydraulikkammerleitung (36) zum Verbinden von dem Hydraulikkammeranschluss (35) eines jeden Schieberventils (30, 30a, 30b) und der Hydraulikkammer (24),
eine Schieberbypassleitung (155) zum Verbinden der Niederdruckölleitung (14) und der Hydraulikkammerleitung (36), um so die Schieberventile (30, 30a, 30b) zu umgehen, und
ein Rückschlagventil (153), das in der Schieberbypassleitung (155) angeordnet ist und konfiguriert ist, einen Fluss eines Öls in die Niederdruckölleitung (14) aus der Hydraulikkammerleitung (36) zu verhindern und sich zu öffnen, um einen Fluss des Öls aus der Niederdruckölleitung (14) in Richtung der Hydraulikkammerleitung (36) zu erlauben, wenn ein Druck in der Hydraulikkammerleitung (36) einen Öffnungsdruck oder höher erreicht.

11. Windturbinen-Stromerzeugungsvorrichtung (1), umfassend:
einen Windturbinenrotor (3),
einen Generator (16),
eine Hydraulikpumpe (8), die konfiguriert ist, durch den Windturbinenrotor (3) angetrieben zu werden, um einen Druck des Öls zu erhöhen und ein Hochdrucköl an die Hochdruckölleitung (12) abzugeben,
einen Hydraulikmotor (10), der konfiguriert ist, durch das von der Hydraulikpumpe (8) über die Hochdruckölleitung (12) empfangene Hochdrucköl angetrieben zu werden und dem Generator (16) mechanische Energie zuzuführen, wobei der Hydraulikmotor einen Auslass aufweist, der mit einem Einlass der Hydraulikpumpe (8) verbunden ist,
wobei zumindest eines von der Hydraulikpumpe (8) oder dem Hydraulikmotor (10) die hydraulische Maschine nach einem der Ansprüche 7 bis 10 ist.

## Revendications

1. Distributeur à tiroir (30) utilisée dans une machine hydraulique comprenant une chambre hydraulique (24), une conduite d'huile haute pression (12) et une conduite d'huile basse pression (14), le distributeur à tiroir (30) comportant :
un boîtier (31) qui comprend un orifice de chambre hydraulique (35) communiquant avec la chambre hydraulique (24), un orifice haute pression (37) communiquant avec la conduite d'huile haute pression (12), et un orifice basse pression (39) communiquant avec la conduite d'huile basse pression (14) ;
un tiroir (60) configuré pour commuter un état de la machine hydraulique entre un premier état dans lequel la chambre hydraulique (24) et la conduite d'huile haute pression (12) sont en communication et un deuxième état dans lequel la chambre hydraulique (24) et la conduite d'huile basse pression (14) sont en communication, en se déplaçant selon une direction axiale du tiroir (60) à l'intérieur du boîtier (31) ; et
une paire de chambres d'amortissement (80, 82) disposées entre des surfaces d'extrémité respectives (63, 66) du tiroir (60) et des plaques latérales respectives (33) du boîtier (31) qui font face aux surfaces d'extrémité (63, 66), et configurées pour ralentir le tiroir (60) quand le tiroir (60) atteint une position immédiatement avant une fin de course,
le distributeur à tiroir (30) étant **caractérisé en ce qu'**il comporte en outre une partie d'ajustement d'effet d'amortissement (85) configurée pour être capable de modifier un effet de décélération sur le tiroir (60) réalisé par la paire de chambres d'amortissement (80, 82).

2. Distributeur à tiroir (30) selon la revendication 1,
dans lequel la partie d'ajustement d'effet d'amortissement (85) comprend une paire d'accumulateurs (90, 95) prévue de manière respectivement correspondante avec la paire de chambres d'amortissement (80, 82), et
dans laquelle chaque accumulateur (90, 95) comprend une chambre d'huile (91) communiquant avec l'une correspondante des chambres d'amortissement (80, 82), et une chambre à gaz (92) disposée séparément de la chambre d'huile (91) à travers une vessie déformable (93).

3. Distributeur à tiroir (30) selon la revendication 1,
dans lequel la partie d'ajustement d'effet d'amortissement (85) comprend :
une paire de clapets anti-retour (100, 102) prévue d'une manière respectivement correspondante avec la paire de chambres d'amortissement (80, 82), chacun des clapets anti-retour (100, 102) étant configuré pour empêcher un écoulement d'une huile dans la chambre d'amortissement correspondante (80, 82) et pour s'ouvrir pour permettre un écoulement de sortie de l'huile de la chambre d'amortissement correspondante (80, 82) quand une pression dans la chambre d'amortissement correspondante (80, 82) atteint une pression de tarage ou plus ;
une conduite d'embranchement haute pression (105) qui part de la conduite d'huile haute pression (12) et est reliée à un côté en aval de la paire de clapets anti-retour (100, 102), et
une soupape de réduction de pression variable (110) disposée dans la conduite d'embranchement haute pression (105), et configurée pour ajuster la pression de tarage des clapets anti-retour (100, 102) en réduisant une pression dans la conduite d'embranchement haute pression (105) .

4. Distributeur à tiroir (30) selon la revendication 3,
dans lequel la soupape de réduction de pression variable (110) est configurée pour ajuster une quantité de diminution de pression dans la conduite d'embranchement haute pression (105) sur la base d'une valeur de mesure d'au moins une parmi une température d'huile ou la pression dans la conduite d'huile haute pression (12).

5. Distributeur à tiroir (30) selon la revendication 1,
dans lequel la partie d'ajustement d'effet d'amortissement (85) comprend :
une paire d'orifices (120, 122) prévue d'une manière respectivement correspondante avec la paire de chambres d'amortissement (80, 82) ; et
une soupape de commutation (130) comprenant un orifice d'alimentation (131) communiquant avec la conduite d'huile haute pression (12), un orifice de réservoir (132) communiquant avec la conduite d'huile basse pression (14), un premier orifice de commande (133) et un deuxième orifice de commande (134), le premier orifice de commande (133) et le deuxième orifice de commande (134) communiquant chacun avec un côté aval de celui correspondant de la paire d'orifices (120, 122), et
dans laquelle la soupape de commutation (130) est configurée pour commuter un état de communication d'orifice entre un état dans lequel le premier orifice de commande (133) est en communication avec l'orifice d'alimentation (131) et le deuxième orifice de commande (134) est en communication avec l'orifice de réservoir (132), et un état dans lequel le deuxième orifice de commande (134) est en communication avec l'orifice d'alimentation (131) et le premier orifice de commande (133) est en communication avec l'orifice de réservoir (132).

6. Distributeur à tiroir (30) selon la revendication 5, comportant en outre
un capteur de position (135) destiné à détecter une position du tiroir (60) dans le boîtier (31),
dans lequel la soupape de commutation (130) de la partie d'ajustement d'effet d'amortissement (85) est configurée pour commuter l'état de communication d'orifice sur la base d'un signal de détection du capteur de position (135) .

7. Machine hydraulique comportant :
au moins un distributeur à tiroir (30) selon l'une quelconque des revendications 1 à 6 ;
la chambre hydraulique (24) ;
la conduite d'huile haute pression (12) ; et
la conduite d'huile basse pression (14).

8. Machine hydraulique selon la revendication 8, dans laquelle le au moins un distributeur à tiroir (30) comporte une pluralité de distributeurs à tiroir (30, 30a, 30b) reliés en parallèle à la chambre hydraulique (24), à la conduite d'huile haute pression (12) et à la conduite d'huile basse pression (14).

9. Machine hydraulique selon la revendication 8, comportant en outre
une pluralité de capteurs de position (135) destinés à détecter des positions des tiroirs dans le boîtier (31), les capteurs de position (135) étant disposés sur les distributeurs à tiroir respectifs (30, 30a, 30b) ; et
un dispositif de commande (136) configuré pour commander, lorsque l'on détermine qu'un collage d'un tiroir (60) s'est produit dans au moins un de la pluralité des distributeurs de tiroir (30, 30a, 30b), d'autres distributeurs à tiroir (30, 30a, 30b) dans lesquels le collage ne s'est pas produit pour entrer dans le deuxième état, sur la base de signaux de détection des capteurs de position (135).

10. Machine hydraulique selon l'une quelconque des revendications 7 à 9, comportant en outre :
un réservoir de stockage (150) pour stocker l'huile ;
une pompe de surcompression (152) pour augmenter une pression d'huile dans le réservoir de stockage (150) et délivrer l'huile à la conduite d'huile basse pression (14) ;
une conduite de chambre hydraulique (36) pour relier l'orifice de chambre hydraulique (35) de chaque distributeur à tiroir (30, 30a, 30b) et la chambre hydraulique (24) ;
une conduite de dérivation de tiroir (155) pour relier la conduite d'huile basse pression (14) et la conduite de chambre hydraulique (36) de façon à contourner les soupapes à tiroir (30, 30a, 30b) ; et
un clapet anti-retour (153) disposé dans la conduite de dérivation de tiroir (155) et configuré pour empêcher un écoulement d'une huile dans la conduite d'huile basse pression (14) depuis la conduite de chambre hydraulique (36), et pour s'ouvrir pour permettre un écoulement de l'huile depuis la conduite d'huile basse pression (14) vers la conduite de chambre hydraulique (36) quand une pression dans la conduite de chambre hydraulique (36) atteint une pression de tarage ou en dessous.

11. Eolienne (1), comportant :
un rotor d'éolienne (3) ;
une génératrice (16) ;
une pompe hydraulique (8) configurée pour être entraînée par le rotor d'éolienne (3) pour augmenter une pression d'huile et pour refouler de l'huile haute pression vers la conduite d'huile haute pression (12) ;
un moteur hydraulique (10) configuré pour être entraîné par l'huile haute pression reçue de la pompe hydraulique (8) par l'intermédiaire de la conduite d'huile haute pression (12) et pour entrer de l'énergie mécanique dans la génératrice (16), le moteur hydraulique ayant une sortie reliée à une entrée de la pompe hydraulique (8),
dans laquelle au moins un parmi la pompe hydraulique (8) ou le moteur hydraulique (10) est la machine hydraulique selon l'une quelconque des revendications 7 à 10.
